# EUROPEAN PATENT SPECIFICATION

(11) **EP 1 567 723 B1**
(45) Date of publication and mention of the grant of the patent: **29.08.2007**
(21) Application number: 03779053.2
(22) Date of filing: 04.12.2003
(51) Int. Cl.: E01H 11/00, E01H 1/05

(54) **Rotary device for removing weeds from joints in a paved area**
Drehangetriebene Vorrichtung zur Unkrautentfernung aus Fugen von gepflasterten Bodenbelägen
Dispositif rotatif permettant d'arracher les mauvaises herbes des jointures d'une zone pavée

(30) Priority: 04.12.2002 NL 1022079
(43) Date of publication of application: 31.08.2005
(73) Proprietor: Kinzo B.V., 6716 BZ Ede (NL)
(72) Inventor: NUESINK, Jacob, NL-6916 BC Tolkamer (NL); ZEGWAARD, Cor, Pieter, NL-3155 AA Maasland (NL)
(74) Representative: Riemens, Roelof Harm
(86) International application number: PCT/NL2003/000860
(87) International publication number: WO 2004/051001

(56) References cited:
- CH-A- 125 163
- DE-A- 19 505 156
- DE-U- 9 000 712
- DE-U- 9 002 359
- DE-U- 29 822 658
- FR-A- 1 345 739

## Description

The invention relates to a rotary device for removing weeds from joints in a paved area in accordance with the preamble of claim 1.

The professional removal of weeds from joints of a paved area involves the use of heavy steerable machines which are provided with one or more rotating cup-like steel brushes with vertical axes of rotation. On account of their size and cost, machines of this type are not suitable for home use.

Individuals generally remove weeds from joints in paved areas around the house and in the garden manually, using a scraper or blade, optionally attached to a shank with a handle. This is heavy, time-consuming and exhausting work, and the results often leave something to be desired. Therefore, use is often also made of weedkillers, which is environmentally unfriendly.

A device in accordance with the preamble of claim 1 is known from DE-U 90 02 359, which shows a weed-removing device having a shank provided with a handle and, at its bottom end, a transverse rod which at one end is provided with a support wheel and at the other end is provided with a wire brush. By means of a distributor belt, the wire brush is driven by an electric motor located a certain distance above the transverse rod.

A drawback of this known weed-removing device is that it is relatively difficult to handle. In particular its lateral stability leaves something to be desired, the device having the tendency to veer sideways, making it difficult to correctly align the wire brush above the joint which is to be cleared. Furthermore, a relatively high compressive force has to be exerted on the shank in order for the weeds to be successfully removed from the joints.

Another weed-removing device is known from DE-U 90 00 712, which in figure 3 discloses an embodiment having a shank provided with a handle and, at its bottom end, a large support wheel at one side of the shank and a relatively small wire brush at the other side of the shank. The wire brush is driven by a pneumatic drive by means of a distributor belt, which pneumatic drive is positioned somewhat above the middle of the shank at the side of the support wheel.

A drawback of this known weed-removing device is that it is also relatively difficult to handle. In particular it is difficult to keep the wire brush correctly aligned above the joint which is to be cleared. Furthermore, a relatively high steering force and compressive force needs to be exerted on the shank in order to keep a proper alignment and brushing force respectively.

The object of the present invention is to at least partially overcome the abovementioned drawbacks and/or to create a usable alternative. More particularly, it is an object of the invention to provide a simple device which allows weeds to be removed in an environmentally friendly, more comfortable way as well as quickly and efficiently using a manually operable device which makes use of a simple rotating brush element mounted on a drive unit.

This object is achieved by a rotary device according to claim 1. The rotary device comprises an elongate frame which is provided with a handle and on which is mounted a drive unit, a brush element which is driven by the drive unit, and a guide wheel located at a distance from the brush element. The drive unit is provided in the vicinity of the bottom end of the frame. The guide wheel is positioned such that the distance between the centre of the guide wheel and the centre of the frame is at least double the distance between the centre of the frame and the centre of the brush element. This arrangement means that a user advantageously has to exert less force on the frame, and also it is easier to keep the brush element manoeuvred into the joint which is to be cleared. This considerably improves the ease of use as well as the results which can be achieved with the rotary device.

It is noted that DE 298 22 658 U also already shows a weed removing device according to the preamble of claim 1. However, in this device the brush element and the guide wheel are positioned one behind the other, instead of being provided on either side of the bottom end of the frame.

In a particular embodiment according to the present invention, the drive unit is arranged in such a manner that its centre of gravity is located closer to the brush element than to the guide wheel, more particularly more than twice as close. This advantageously ensures that the weight of the drive unit is substantially supported by the brush element and only to a slight extent by the guide wheel. As a result, the brush element presses on the paving joint with maximum pressure derived from the weight of the drive unit and the weight of the frame. Consequently, a user may exert less compressive force on the frame.

Further preferred embodiments are defined in the subclaims.

The invention will be explained in more detail with reference to exemplary embodiments in the appended drawing, in which:
Figure 1 shows a perspective view of an embodiment of the rotary device, in which the drive unit and the brush element are diagrammatically indicated by dashed lines;
Figure 2 shows a front view of the device in Figure 1, illustrating the drive unit and the brush element in full;
Figure 3 shows a person removing weeds from joints using the device shown in Fig. 1;
Figure 4 shows a perspective view of a preferred embodiment;
Figure 5 shows a partial view of Figure 4 during use; and
Figure 6 shows a partially cut-away, diagrammatic front view of Figure 4.

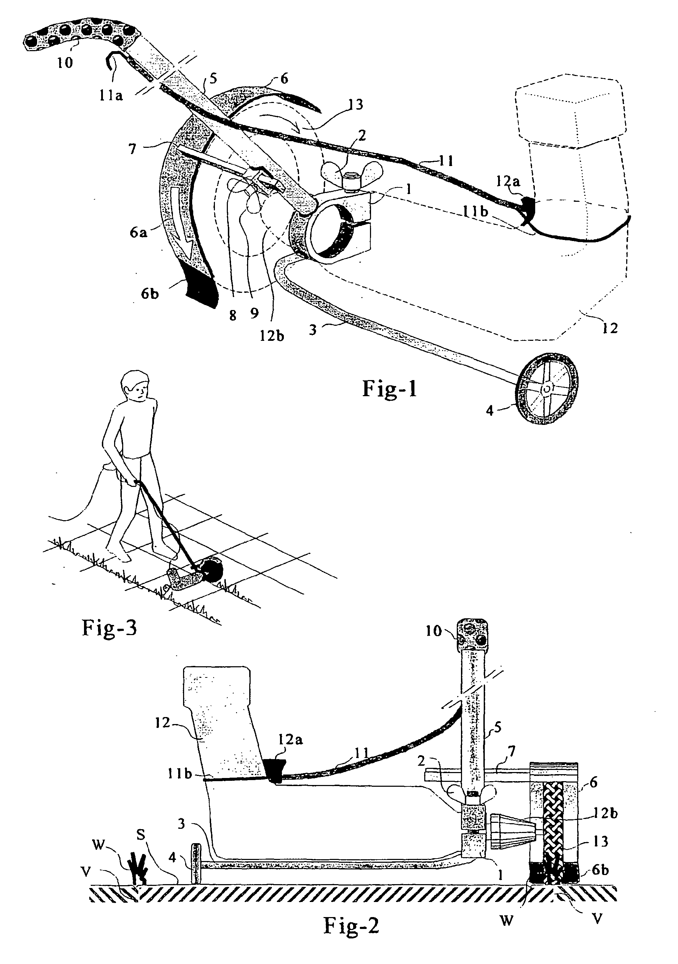

In Figures 1 and 2, the rotary device according to the invention comprises a machine clamp 1, which clamp is provided with a wing nut 2 and in which clamp 1 a handheld drill 12 or similar feature can be fixed using the wing nut 2. A standard steel brush 13 with axis is fixed in the drill head 12b of the machine 12. A support frame 3 with a small wheel 4 for supporting the machine 12 is fixedly connected to the clamp 1. A shank 5 with handle 10, which may be of adjustable length, is also fixedly connected to the clamp 1. At its underside, close to the attachment to the machine clamp 1, the shank 5 is provided with a bracket 8 with wing bolt 9 for securing a guard 6 around the rotating brush 13, to which end the guard 6 is provided with an arm 7 which can be pushed so that it fits into the bracket 8 and fixed in place using the wing bolt 9. The guard 6 is provided with a flexible mud flap 6b and with an arrow 6a. The guard 6 is fixed into the bracket 8 using the arm 7 in such a manner that the arrow 6a lies precisely in the plane of the rotating brush 13 in order to indicate the position of the brush 13 with respect to the joints V in the paved area 8 from which weeds W are to be removed.

Figures 1 and 2 work on the basis that a cordless drill with a chest will be clamped into the machine clamp 1.

Figure 3 shows how it is possible to remove weeds from joints using the appliance provided with an electrically driven handheld drill with a power cord. In this case, the rotating steel brush of the appliance rests on the ground at the location of the joint which is to be cleaned. The support frame 3 with its small wheel 4 supports the machine so that the operator can relax when holding the handle and does not have to exert any torque thereon. Figure 3 shows the situation in which the device is being pushed forward along the paved area. In practice, however, it has been found that the best results are obtained if the device is pulled backwards.

The machine can be switched on and off by means of a Bowden cable 11 with a pulling grip 11a at the handle 10 and loop 11b around the handle of the machine 12 at the location of the operating switch 12a, as a result of which the casing 11 will depress the switch 12a when the cable 11 is pulled by means of the pull grip 11a.

The machine clamp may also be provided with a socket-headed clamping bolt instead of a stud with wing nut. In the case of an electric drill, the handle may be provided with an electrical switch for switching the machine on and off, or it is possible to enable the machine to be switched on and off using a system of mechanical rods which can be actuated from the handle instead of a Bowden cable.

As can be seen clearly from the figures, according to the inventive idea the distance between the small wheel 4 and the shank 5 is at least double the distance between the steel brush 13 and the shank 5, and more particularly is more than triple this distance.

Furthermore, the machine 12 is provided at the bottom end of the shank 5 and its output drive shaft lies in line with the axis of rotation of the steel brush 13.

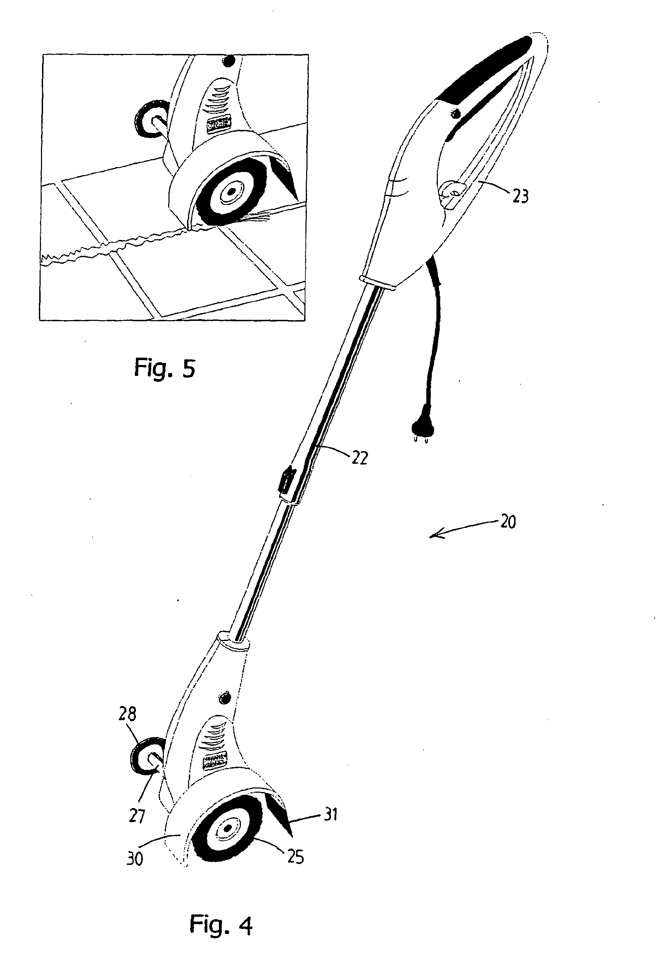

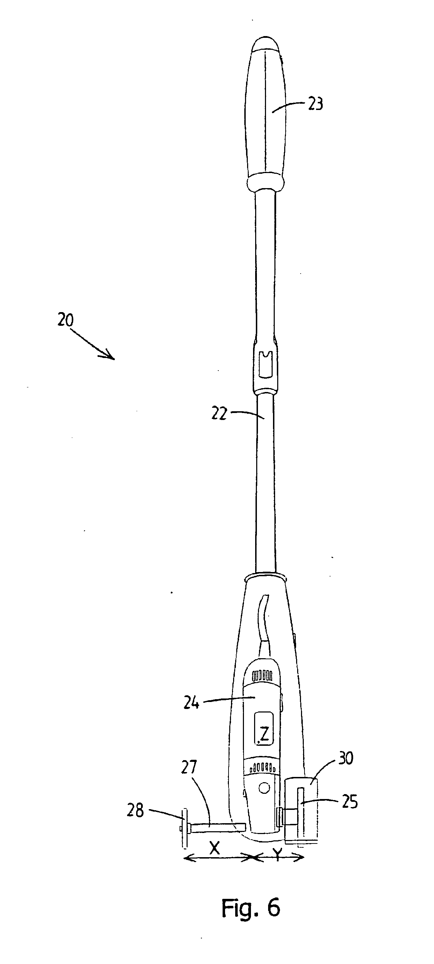

In Figures 4-6, the rotary device overall is denoted by reference numeral 20. The device 20 comprises an elongate frame which comprises a shank 22 of adjustable length. At its free end, the shank is provided with a handgrip 23. In the vicinity of the bottom end of the shank 22 there is a drive unit, which in this case is formed by an electric motor 24. An electric cable extends from the electric motor 24 through a cavity in the shank 22 to a switch in the handgrip 23. The output drive shaft of the electric motor 24 is positioned transversely with respect to the axis of rotation of a brush element 25, the output drive shaft ending at the axis of rotation of the brush element 25 and driving the latter by means of a right-angled geared transmission. Furthermore, the electric motor 24 is positioned substantially parallel to the shank 22, with its output drive shaft extending at the axis of the shank 22, as seen in the transverse direction of the device.

A transverse rod 27 with a small guide wheel 28 at one end is secured to the shank 22. In this case too, in accordance with the invention the distance x between the small guide wheel 22 and the centre axis of the shank 22 is more than double the distance y between the brush element 25 and the axis of the shank 22. The distance x is in this case preferably greater than 10 centimetres. The distance y is in this case preferably less than 5 centimetres. The distances x and y added together amount to at least 15 centimetres, in order to make the device 20 sufficiently stable.

On account of the vertical arrangement of the electric motor 24 at the axis of the shank 22, together with the abovementioned distance ratio x-y, the centre of gravity z of the electric motor 24 is located closer to the brush element 25 than the small guide wheel 28. More particularly, with regard to the centre of gravity, it is also the case that the distance between this centre of gravity and the small guide wheel 28 is at least double the distance between the brush element 25 and the centre of gravity of the electric motor 24.

The diameter of the small guide wheel 28 is smaller than the
- o - diameter of the brush element 25, and more particularly is less than three quarters thereof.

A safety guard 30, which extends over more than half the outer circumference of the brush element 25, is provided around the brush element 25. A rubber mud flap 31 is provided at the rear side. This provides good protection from dirt thrown up by the brush element 25, which otherwise can hit the face or eyes or clothing. In addition, the safety guard 30 has the advantage that if an accident happens and the shank 22 of the rotating device 20 falls to the ground, the device does not tend to move. This is because in this case it is not the brush element 25 which lies on the ground, but rather the safety guard 30 which hits the ground as a result of the device falling over, so that the rotating brush element 25 is lifted off the ground. The guard 30 preferably also extends along part of the top end of the brush element 25, so that the dirt also cannot fly out in that direction.

The appliance according to the invention is not restricted to the exemplary embodiment shown in the drawings and described above. Numerous variations can be made within the scope of the invention as defined by the appended claims. For example, it is possible to use other types of drive units, optionally with an internal power source. In addition to a frame in shank form, it is also possible to use other types of elongate frames, for example comprising two rods located next to one another. The brush element used may be a standard commercially available steel brush. Other types of brush element are also possible, for example brush elements made from a plastic material, for particular applications. Furthermore, the device according to the invention can also be used in other situations or applications.

Thus an environmentally friendly rotary device is provided which is inexpensive to produce, successfully follows a joint which is to be cleared without excessively high forces having to be exerted on it and provides good results with regard to the removal of weeds.

## Claims

1. Rotary device for removing weeds from joints in a paved area, comprising:
- an elongate frame (22) which is provided with a handle (23);
- a drive unit (24) mounted on the frame (22), in the vicinity of the bottom end of the frame (22);
- a brush element (25) which is connected to the drive unit (24) in such a manner that it can be driven in rotation about an axis of rotation which extends substantially in a direction which is transverse with respect to the frame (22); and
- a guide wheel (28) coupled to the frame (22),
the guide wheel (28) and the brush element (25) being provided on either side of the bottom end of the frame (22),
**characterized in that**
the distance (x), in said transverse direction, between the centre of the guide wheel (28) and a centre axis of the frame (22) is at least double the distance (y) between the centre of the brush element (25) and the centre axis of the frame (22).

2. Rotary device according to claim 1, in which the centre of gravity (z) of the drive unit (24) is positioned closer to the brush element (25) than to the guide wheel (28).

3. Rotary device according to claim 2, in which the distance between the guide wheel (28) and the centre of gravity (z) of the drive unit (24) is at least double the distance between the brush element (25) and the centre of gravity (z) of the drive unit (24).

4. Rotary device according to one of the preceding claims, in which the distance (x) between the guide wheel (28) and the centre axis of the frame (22) is greater than 10 centimetres.

5. Rotary device according to one of the preceding claims, in which the distance (y) between the brush element (25) and the centre axis of the frame (22) is less than 5 centimetres.

6. Rotary device according to one of the preceding claims, in which the output drive shaft of the drive unit (24) is positioned substantially at right angles to the axis of rotation of the brush element (25).

7. Rotary device according to claim 6, in which the output drive shaft of the drive unit (24), as seen in the transverse direction, extends substantially at the centre axis of the frame (22).

8. Rotary device according to one of the preceding claims, in which a safety guard (30) is provided around part of the brush element (25), which safety guard (30) extends over more than half the outer circumference of the brush element (25).

9. Rotary device according to claim 8, in which the safety guard (30) is provided, on its rear-facing side, with a mud flap (31).

10. Rotary device according to one of the preceding claims, in which the frame (22) is of adjustable length.

11. Rotary device according to one of the preceding claims, in which the distance (x+y) between the guide wheel (28) and the brush element (25) is greater than 15 centimetres.

12. Rotary device according to one of the preceding claims, in which the drive unit (24) has its output drive shaft ending at the axis of rotation of the brush element (25).

13. Rotary device according to one of the preceding claims, in which the drive unit (24) comprises an electric motor.

14. Rotary device according to one of the preceding claims, in which the diameter of the guide wheel (28) is smaller than the diameter of the brush element (25).

15. Rotary device according to one of the preceding claims, in which the axis of rotation of the guide wheel (28) lies lower than the axis of rotation of the brush element (25).

16. Rotary device according to one of the preceding claims, in which the drive unit (24) has its output drive shaft lying in line with the axis of rotation of the brush element (25).

17. Rotary device according to one of the preceding claims, in which the frame is formed by a shank (22).

18. Rotary device according to one of the preceding claims, in which the drive unit has an internal power source.

## Patentansprüche

1. Rotationsvorrichtung zum Beseitigen von Unkraut aus Fugen in einem gepflasterten Bereich, mit:
- einem länglichen Rahmen (22), welcher mit einem Handgriff (23) versehen ist;
- einer Antriebseinheit (24), die an dem Rahmen (22) in der Nähe des bodenseitigen Endes des Rahmens (22) angebracht ist;
- einem Bürstenelement (25), welches mit der Antriebseinheit (24) derart verbunden ist, dass dieses um eine Rotationsachse, welche sich im Wesentlichen in einer Richtung erstreckt, die in Bezug zum Rahmen (22) quer verläuft, in Rotation versetzt werden kann; und
- einem Führungsrad (28), das an den Rahmen (22) gekoppelt ist,
wobei das Führungsrad (28) und das Bürstenelement (25) auf beiden Seiten des bodenseitigen Endes des Rahmens (22) vorgesehen sind,
**dadurch gekennzeichnet dass**,
der Abstand (x) in der Querrichtung zwischen der Mitte des Führungsrades (28) und einer Mittelachse des Rahmens (22) wenigstens das Doppelte des Abstandes (y) zwischen der Mitte des Bürstenelements (25) und der Mittelachse des Rahmens (22) beträgt.

2. Rotationsvorrichtung nach Anspruch 1, in welcher das Zentrum der Schwerkraft (z) der Antriebseinheit (24) näher an dem Bürstenelement (25) als an dem Führungsrad (28) positioniert ist.

3. Rotationsvorrichtung nach Anspruch 2, in welcher der Abstand zwischen dem Führungsrad (28) und dem Zentrum der Schwerkraft (z) der Antriebseinheit (24) wenigstens das Doppelte des Abstandes zwischen dem Bürstenelement (25) und dem Zentrum der Schwerkraft (z) der Antriebseinheit (24) beträgt.

4. Rotationsvorrichtung nach einem der vorstehenden Ansprüche, in welcher der Abstand (x) zwischen dem Führungsrad (28) und der Mittelachse des Rahmens (22) größer als 10 Zentimeter ist.

5. Rotationsvorrichtung nach einem der vorstehenden Ansprüche, in welcher der Abstand (y) zwischen dem Bürstenelement (25) und der Mittelachse des Rahmens (22) weniger als 5 Zentimeter ist.

6. Rotationsvorrichtung nach einem der vorstehenden Ansprüche, in welcher die Abtriebswelle der Antriebseinheit (24) im Wesentlichen unter rechten Winkeln zu der Rotationsachse des Bürstenelements (25) positioniert ist.

7. Rotationsvorrichtung nach Anspruch 6, in welcher die Abtriebswelle der Antriebseinheit (24) in der Queransicht im Wesentlichen an der Mittelachse des Rahmens (22) erstreckt.

8. Rotationsvorrichtung nach einem der vorstehenden Ansprüche, in welcher ein Sicherheitsschutz (30) um einen Teil des Bürstenelements (25) herum vorgesehen ist, wobei sich dieser Sicherheitsschutz (30) über mehr als die Hälfte des Außenumfangs des Bürstenelements (25) erstreckt.

9. Rotationsvorrichtung nach Anspruch 8, in welcher der Sicherheitsschutz (30) auf seiner Rückseite mit einem Schmutzfänger (31) versehen ist.

10. Rotationsvorrichtung nach einem der vorstehenden Ansprüche, in welcher der Rahmen (22) in seiner Länge einstellbar ist.

11. Rotationsvorrichtung nach einem der vorstehenden Ansprüche, in welcher der Abstand (x + y) zwischen dem Führungsrad (28) und dem Bürstenelement (25) größer als 15 Zentimeter ist.

12. Rotationsvorrichtung nach einem der vorstehenden Ansprüche, in welcher die Antriebseinheit (24) mit ihrer Abtriebswelle an der Rotationsachse des Bürstenelements (25) endet.

13. Rotationsvorrichtung nach einem der vorstehenden Ansprüche, in welcher die Antriebseinheit (24) einen Elektromotor umfasst.

14. Rotationsvorrichtung nach einem der vorstehenden Ansprüche, in welcher der Durchmesser des Führungsrades (28) kleiner ist als der Durchmesser des Bürstenelements (25).

15. Rotationsvorrichtung nach einem der vorstehenden Ansprüche, in welcher die Rotationsachse des Führungsrades (28) tiefer als die Rotationsachse des Bürstenelements (25) liegt.

16. Rotationsvorrichtung nach einem der vorstehenden Ansprüche, in welcher die Antriebseinheit (24) mit ihrer Abtriebswelle in einer Linie mit der Rotationsachse des Bürstenelements (25) liegt.

17. Rotationsvorrichtung nach einem der vorstehenden Ansprüche, in welcher der Rahmen aus einem Schaft (22) gebildet ist.

18. Rotationsvorrichtung nach einem der vorstehenden Ansprüche, in welcher die Antriebseinheit eine interne Leistungsquelle aufweist.

## Revendications

1. Dispositif rotatif permettant d'arracher les mauvaises herbes des jointures dans une zone pavée, comprenant :
- un cadre allongé (22) qui est pourvu d'une poignée (23) ;
- une unité d'entraînement (24) montée sur le cadre (22), dans le voisinage de l'extrémité inférieure du cadre (22) ;
- un élément de brosse (25) qui est relié à l'unité d'entraînement (24) de manière telle qu'il peut être entraîné en rotation autour d'un axe de rotation qui s'étend sensiblement dans une direction qui est transversale par rapport au cadre (22) ; et
- une roue de guidage (28) couplée au cadre (22),
la roue de guidage (28) et l'élément de brosse (25) étant prévus des deux côtés de l'extrémité inférieure du cadre (22),
**caractérisé en ce que**
la distance (x), dans ladite direction transversale, entre le centre de la roue de guidage (28) et un axe central du cadre (22) est au moins le double de la distance (y) entre le centre de l'élément de brosse (25) et l'axe central du cadre (22).

2. Dispositif rotatif selon la revendication 1, dans lequel le centre de gravité (z) de l'unité d'entraînement (24) est positionné plus près de l'élément de brosse (25) que de la roue de guidage (28).

3. Dispositif rotatif selon la revendication 2, dans lequel la distance entre la roue de guidage (28) et le centre de gravité (z) de l'unité d'entraînement (24) est au moins le double de la distance entre l'élément de brosse (25) et le centre de gravité (z) de l'unité d'entraînement (24).

4. Dispositif rotatif selon une des revendications précédentes, dans lequel la distance (x) entre la roue de guidage (28) et l'axe central du cadre (22) est supérieure à 10 centimètres.

5. Dispositif rotatif selon une des revendications précédentes, dans lequel la distance (y) entre l'élément de brosse (25) et l'axe central du cadre (22) est inférieure à 5 centimètres.

6. Dispositif rotatif selon une des revendications précédentes, dans lequel l'arbre d'entraînement de sortie de l'unité d'entraînement (24) est positionné sensiblement à angle droit par rapport à l'axe de rotation de l'élément de brosse (25).

7. Dispositif rotatif selon la revendication 6, dans lequel l'arbre d'entraînement de sortie de l'unité d'entraînement (24), tel qu'il est vu dans la direction transversale, s'étend sensiblement au niveau de l'axe central du cadre (22).

8. Dispositif rotatif selon une des revendications précédentes, dans lequel un dispositif de protection (30) est prévu autour d'une partie de l'élément de brosse (25), lequel dispositif de protection (30) s'étend sur plus de la moitié de la circonférence extérieure de l'élément de brosse (25).

9. Dispositif rotatif selon la revendication 8, dans lequel le dispositif de protection (30) est pourvu, sur son côté tourné vers l'arrière, d'un garde-boue (31).

10. Dispositif rotatif selon une des revendications précédentes, dans lequel le cadre (22) est de longueur réglable.

11. Dispositif rotatif selon une des revendications précédentes, dans lequel la distance (x+y) entre la roue de guidage (28) et l'élément de brosse (25) est supérieure à 15 centimètres.

12. Dispositif rotatif selon une des revendications précédentes, dans lequel l'arbre d'entraînement de sortie de l'unité d'entraînement (24) se termine au niveau de l'axe de rotation de l'élément de brosse (25).

13. Dispositif rotatif selon une des revendications précédentes, dans lequel l'unité d'entraînement (24) comprises un moteur électrique.

14. Dispositif rotatif selon une des revendications précédentes, dans lequel le diamètre de la roue de guidage (28) est inférieur au diamètre de l'élément de brosse (25).

15. Dispositif rotatif selon une des revendications précédentes, dans lequel l'axe de rotation de la roue de guidage (28) se trouve plus bas que l'axe de rotation de l'élément de brosse (25).

16. Dispositif rotatif selon une des revendications précédentes, dans lequel l'arbre d'entraînement de sortie de l'unité d'entraînement (24) est aligné avec l'axe de rotation de l'élément de brosse (25).

17. Dispositif rotatif selon une des revendications précédentes, dans lequel le cadre est formé par une tige (22).

18. Dispositif rotatif selon une des revendications précédentes, dans lequel l'unité d'entraînement possède une source de puissance interne.
